(19) **Europäisches Patentamt European Patent Office Office européen des brevets**

(11) **EP 2 834 624 B1**

(12) **EUROPEAN PATENT SPECIFICATION**

(45) Date of publication and mention of the grant of the patent:
**24.07.2019 Bulletin 2019/30**

(21) Application number: **13715423.3**

(22) Date of filing: **02.04.2013**

(51) Int Cl.:
*G01N 21/65* (2006.01)    *G01N 33/53* (2006.01)
*G01J 3/44* (2006.01)

(86) International application number:
**PCT/GB2013/050864**

(87) International publication number:
**WO 2013/150291 (10.10.2013 Gazette 2013/41)**

(54) **A METHOD FOR MEASURING PERFORMANCE OF A SPECTROSCOPY SYSTEM**

VERFAHREN ZUM MESSEN DER LEISTUNG EINES SPEKTROSKOPISCHEN SYSTEMS

PROCÉDÉ PERMETTANT DE MESURER LA PERFORMANCE D'UN SYSTÈME DE SPECTROSCOPIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2012 EP 12163397**

(43) Date of publication of application:
**11.02.2015 Bulletin 2015/07**

(73) Proprietor: **Renishaw PLC**
**Wotton-Under-Edge**
**Gloucestershire GL12 8JR (GB)**

(72) Inventors:
• **THURSTON, Thomas**
**Wotton-under-Edge**
**Gloucestershire GL12 8JR (GB)**
• **BELL, Ian**
**Wotton-under-Edge**
**Gloucestershire GL12 8JR (GB)**

• **SMITH, Brian**
**Wotton-under-Edge**
**Gloucestershire GL12 8JR (GB)**
• **WOOLFREY, Andrew**
**Wotton-under-Edge**
**Gloucestershire GL12 8JR (GB)**
• **GREEN, Julie**
**Glasgow G33 1AP (GB)**

(74) Representative: **Matthews, Paul et al**
**Renishaw plc**
**Patent Department**
**New Mills**
**Wotton-under-Edge, Gloucestershire GL12 8JR (GB)**

(56) References cited:
**WO-A1-2009/134887    JP-A- 2011 220 994**
**US-A1- 2005 192 767    US-A1- 2007 048 746**
**US-A1- 2007 064 228**

## Description

### Field of Invention

This invention concerns a method for measuring performance of a spectroscopy system. The invention has particular, but not exclusive, application to measuring the performance of a Raman spectroscopy system used to identify or quantify one or more components present in a sample from a known set of possible components, such as in a multiplex assay.

### Background

It is known to use Raman spectroscopy to identify components present in a sample. To enhance the Raman signal, surface enhanced resonance Raman scattering (SERRS) may be used. SERRS uses the principle that the molecules of the component to be identified are adsorbed on an active surface containing a chromophore having an electronic transition with a frequency near to (preferably within 150 nm) of the laser wavelength used to excite the plasmon on the enhancing substrate.

For a biological sample, to provide a sufficiently distinct chromophore for each type of molecule to be identified, the sample may be treated to attach different dyes to each type of molecule to be identified (e.g. different types of oligonucleotides). Examples of such techniques are described in WO09/022125 and US2006246460.

In one form, an assay is constructed to detect disease states by attaching the dye to an oligonucleotide built to complement a target nucleotide sequence (target sequence) known to be unique to the causative organism(s). It is then introduced to a sample containing DNA fragments. If the target sequence(s) are present in the sample the dye labelled oligonucleotide hybridises to it. By adding an oligonucleotide with biotin which also recognises the target sequence it is possible to separate the DNA complex containing the target sequence and the dye using streptavidin coated magnetic beads which attach to the complex via the biotin / streptavidin interaction. The dye sequence is then released and adsorbed onto silver or gold nanoparticles which, preferably when aggregated, act as the SERRS substrate for the dye giving very strong signals from an aqueous environment. It is a characteristic of SERRS that the spectrum consists of a sharp set of lines almost always exclusively from the dye. This is because the Raman scattering surface enhancement factor for the dye is very high compared to the enhancement factor from the rest of the oligonucleotide so other signals are very weak in comparison. These sharp lines are characteristic of the dye giving *in situ* identification and the sharp nature of the lines mean that mixtures of dyes can be identified without separation. This enables the detection of multiple labels in one sample.

It is desirable to measure a level of performance that can be expected from such a multiplex assay. However, the complexity of the multiplex assay and the unknown nature of a sample mean that there is a wide range of factors that could affect the chances of correctly identifying or quantifying an analyte in the sample. It is desirable that a measure of performance of the multiplex assay takes into account this wide range of factors in order that the measure of performance fairly reflects the performance that is likely to be achieved by the user.

One way in which a performance of a system can be measured is to carry out multiple experiments in which factors that can change are deliberately varied and, from the results, a determination is made of the performance of the system. However, if the number of factors that can vary is large, if the factors are difficult to control or if one or more of the factors can vary over a large range, conducting experiments even approximately spanning all possible circumstances that can occur to obtain a representative measure of performance is a considerable challenge, if indeed it is possible at all.

US2005/192767 A1 discloses a strategy for the quantitative determination of enantiomeric purity that combines guest-host complexation, spectroscopy, and chemometric modeling. Spectral data for samples of known enantiomeric composition is subjected to partial least squares ("PLS-1") regression to produce a mathematical model that can be used to predict the enantiomeric composition of a set of samples of unknown enantiomeric purity. The prediction results obtained from the models for enantiomers of phenylalinine were validated with an independently prepared set of nine validation samples. A root mean square of the relative errors between the predicted concentrations and actual concentrations was used as a figure of merit to evaluate the predictive ability of the models.

### Summary of Invention

According to a first aspect of the invention there is provided a method of measuring the performance of a spectroscopy system according to claim 1.

In this way, a measure of performance can be determined within a reasonable time frame that takes into account possible variation that may occur. In particular, it may be possible to collect a plurality of component spectra for each single component identifiable using the system that is representative of the spectral variability that may occur. These single spectra can then be used to simulate scenarios for which spectra have not been obtained, for example, variations in performance that occur with different concentrations and/or components and the performance of the system when more than one of the components is present in a sample. This approach may assume that the spectral response from a single component is linear with concentration and additive in the presence of spectral contributions from other components; that is the Beer-Lambert law is obeyed by the system.

Many simulated sample spectra may be simulated for any one potential sample in order to obtain a statistically significant measure of performance for that potential sample. Accordingly, there may be a many-to-one correspondence between the simulated sample spectra and potential sample(s). However, it may not be necessary to simulate multiple simulated sample spectra for any one potential sample, such as if the measure of performance is for the overall system rather than specific to a particular potential sample.

The analyses may comprise qualifying the presence and/or absence of components based upon the simulated sample spectrum. In such an embodiment, simulated sample spectra may be simulated for different relative concentrations of the components but the analysis may only be concerned with whether or not a component can be identified. However, the analyses may comprise quantifying a concentration of components from the simulated sample spectrum.

The measure of performance may comprise a measure of sensitivity and/or specificity of the system in identifying and/or quantifying one or more of the components. The measure of performance may comprise a limit of concentration of one or more of the components in a sample at which a minimum level of sensitivity is achieved for identifying and/or quantifying the one or more components.

The plurality of component spectra for each component may be obtained by performing experiments in accordance with an experimental design, such as fractional or full factorial design, in which factors identified as influencing a spectral response of the components are varied through a range of possibilities. These factors may include operator, time between preparation of a sample and measurement, instrument from which spectra are obtained, batch of the component(s) and/or batch of reagents, such as dye and/or colloid. The range in which factors may vary may be limited by system specifications, for example the system specification may require that the spectrum of a sample is obtained with a particular type, such as make, of instrument such that it is not necessary to obtain spectra from other makes of instruments and/or may require that the batch of components are obtained from a particular source such that it is not necessary to obtain spectra for components obtained from other sources.

The plurality of component spectra obtained for each component may be obtained with the component at the same concentration, which may be a pre-determined reference concentration. However, these concentrations may vary between components, depending upon system specifications.

The analyses may comprise analysing each sample using a reference spectrum for each component to obtain the measured quantity and/or quality of the characteristic. The method may comprise selecting a reference spectrum for each component of the set of components, each reference spectrum selected from the plurality of component spectra for that component and differing from the component spectrum used to simulate the simulated sample spectrum that is analysed using the reference spectrum. Different reference spectra may be selected for the analysis of different simulated sample spectra. In this way, the measure of performance may take account of variations in reference spectra as well as variations in simulated sample spectra. Use of different reference spectra to analyse a simulated sample spectrum may produce different results. A pool of component spectra from which a reference spectrum may be selected may be limited by system requirements. For example, if it is a requirement when analysing an unknown sample that the reference spectra are obtained using the same spectroscopy apparatus as that used to obtain the spectrum from the unknown sample, the method of measuring performance may only select reference spectra from component spectra that have been collected using the same apparatus as the component spectrum/spectra used to simulate the simulated sample spectrum. Similar restrictions on the reference spectra may apply to other factors such as temperature, time between measurements, etc whose variation may be limited between reference spectra and simulated sample spectra, even though the plurality of component spectra capture a greater range of variations.

The simulated sample spectra may be simulated for different concentrations of the or each component in the potential sample.

The component spectra used to simulate each simulated sample spectrum, and optionally the reference spectra used to analyse each simulated sample spectrum, may be randomly selected from an appropriate set of spectra. Such a procedure may be appropriate when the number of possible combinations of component spectra and reference spectra is so large as to make a more systematic approach unfeasible. An appropriate set of component spectra may be all of the component spectra for a component or may be a subset of these component spectra.

The or each component in the potential sample and/or a concentration of the or each component in the potential sample may be randomly selected based upon at least one probability distribution. Such a probability distribution may represent the likelihood of finding a component, combination of components and/or concentration of a component in a sample. The probability distribution may be a likelihood of a sample containing particular components, a particular component at various concentrations or combinations of particular components. Alternatively, a probability distribution may not be specific to particular components but may be a general likelihood of a sample containing a non-specific component of the set at various concentrations or a number of non-specific components in a combination. This alternative may be appropriate when the probability distributions are similar for different components/combinations such that there is little advantage in using separate distributions for different components/combinations or when there is insufficient information for component specific probability distributions. Biasing the random selection towards certain combinations using the probability distribution may ensure that the measure of performance is not biased by scenarios that are unlikely to occur in reality.

The analysis may be a multivariate analysis technique, such as a method based upon a direct classical least squares (DCLS) analysis.

The method may be for measuring the performance of a system using surface enhanced resonance Raman spectroscopy (SERRS), such as a SERRS multiplex assay, as described above. The components may be dyes to be used within the multiplex assay.

The method may form part of a method of selecting specifications of the system. Specifications of the system may be selected and/or modified based upon the measurements of performance. Such selection and/or modification of the specifications may alter the set of component spectra and/or potential samples that can be measured by the system. For example, in response to measurement of performance of an initial set of simulated sample spectra, more stringent requirements may be placed on a factor that influences spectral response of the components, eg modifying the maximum time allowed between preparation of a sample and measurement, eliminating the need to simulate simulated sample spectra using component spectra obtained under conditions falling outside of these new specifications and/or only for a subset of components.

Initially, the performance may be measured for potential samples comprising only one component, with an initial selection and/or modification of the specifications being made based upon these measurements, later measurements of performance based upon potential samples comprising multiple components. In this way, spectra and/or components may be eliminated before analysing multi-component samples reducing the number of possible multi-component samples, and therefore, the processing that is required.

The disclosure also concerns a system, such as a multiplex assay, designed in accordance with the above method.

The apparatus may comprise memory having stored thereon a library of the plurality of component spectra, the processor arranged to retrieve the spectra form the memory, as required. It will be understood that the step of retrieving a plurality of spectra from memory may be carried out before or during step b). For example, the relevant spectrum may be retrieved only once it has been selected for use as a reference spectrum or for simulating the simulated sample spectrum.

## Description of the Drawings

Figure 1 is a diagram showing steps in a method of determining a measure of performance in accordance with an embodiment of the invention;

Figure 2 is a diagram illustrating the simulation of a simulated sample spectrum in accordance with an embodiment of the invention;

Figure 3 is a table showing a measure of performance in accordance with an embodiment of the invention;

Figure 4 is a table showing another a measure of performance in accordance with an embodiment of the invention;

Figure 5 is a table showing a measure of performance in accordance with an embodiment of the invention;

Figure 6 is a schematic graphical representation of the measures of performance shown in Figures 3 and 4; and

Figure 7 is a flowchart illustrating a method of analysing a spectroscopy spectrum.

## Description of Embodiments

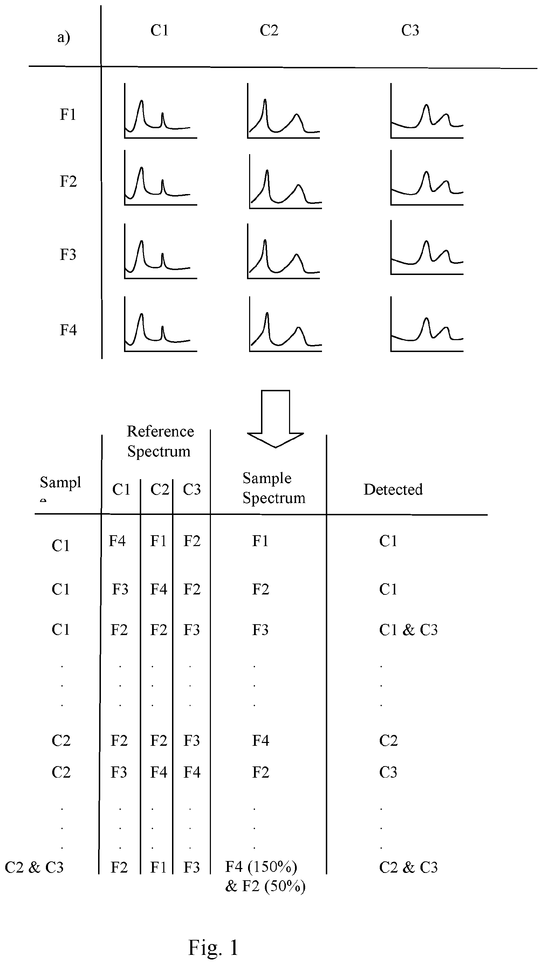

Referring to Figure 1, a first step in a method of measuring the performance of a spectroscopy system comprises obtaining spectra for each component that contributes to the spectrum measured by the system, the spectra representative of signal variability for the component. In order to achieve a representative set of spectra, spectra are obtained under different conditions using a fractional factorial experimental design. Such an experimental design will cover a number of factors that may affect the signal from the component, such as operator, time between preparation of a sample and measurement, instrument from which spectra are obtained, batch of the component(s) and/or batch of reagents, such as dye and/or colloid in the case of SERRS. The range over which experimental data is obtained may depend on specifications defined for the spectroscopy system. For example, in the case of a multiplex assay used for medical diagnosis, a maximum time may be specified between adding colloid to a sample from a patient and measurement, the fractional factorial experimental design specifying obtaining spectra from samples wherein the time between adding the colloid and measurement of a sample varies across a range of values below the maximum time.

In this embodiment, each spectrum is obtained from a test sample containing the component at a reference concentration. The reference concentration may be selected to be a target or expected concentration of the component in an unknown sample to be analysed. For example, an expected concentration of an analyte in a patient sample or a target concentration to be achieved by an amplification of the analyte, such as by PCR.

There is no lower or upper limit on the number of spectra, but each set should encompass factors effecting variation in the spectroscopy signal. In this embodiment, the spectra are filtered to remove spectra where the spectroscopy signal is either significantly weaker of stronger than the average. This is intended to remove outlying spectra, which are not representative of the variation to be expected.

Figure 1 schematically represents a plurality of spectra obtained for each component C1, C2 and C3 for a range of different conditions F1 to F4. These spectra may be stored in memory to form a library of spectra for future processing.

A set of "blank" spectra (not shown) are also obtained for samples containing no components of interest. For example, a spectrum may be obtained from a sample comprising the support substrate only.

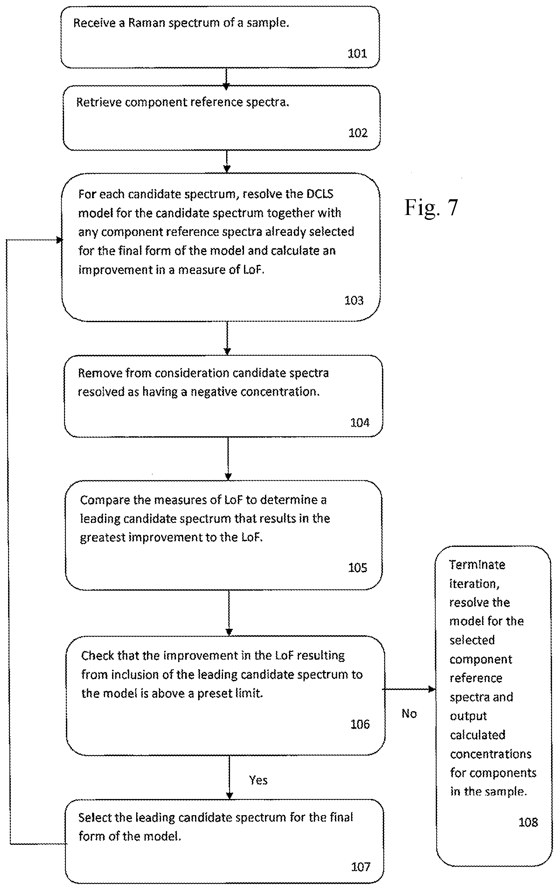

In a second step, an analysis technique is used to determine whether the correct component(s) can be identified from a simulated spectrum for a plurality of potential samples. In this embodiment, the analysis technique is a method based upon Direct Classical Least Squares (DCLS) fitting of reference spectra to a simulated sample spectrum, as described below with reference to Figure 7.

To obtain a statistically significant data set, simulated sample spectra are repeatedly simulated and analysed for a potential sample by:-

i) for each component, randomly selecting a reference spectrum from the plurality of spectra for that component,
ii) randomly selecting a spectrum/spectra for the or each component that is designated as present in the potential sample and simulating a simulated sample spectrum for a potential sample using the selected spectra/spectrum., and
iii) analysing the simulated sample spectrum using the algorithm described below with reference to Figure 7 and the reference spectra to identify one or more components.

These steps are carried out for a number of different potential samples. The table of Figure 1 schematically shows these steps, each row of the table showing, from left to right, the component(s) that make up the sample, the spectra selected for use as reference spectra, the spectra used to simulate the simulated sample spectrum and the components that were detected through analysis of the simulated sample spectrum using the reference spectra.

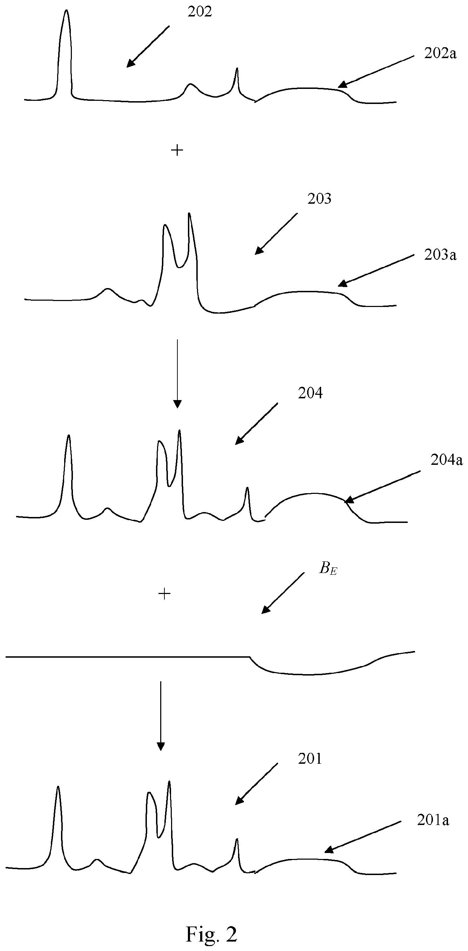

Referring to Figure 2, in this embodiment, to simulate a simulated sample spectrum 201 in step ii) for a potential sample comprising multiple components it is necessary to combine the component spectra 202, 203 selected for the components. This may be achieved by adding the spectra 202, 203 together, possibly scaled to simulate a sample in which the components are at a concentration that is higher or lower than their reference concentration. However, each component spectrum 202, 203 comprises a contribution 202a, 203a from the substrate on which the test sample was held (so called "blank contribution"). The addition of multiple component spectra together may result in a combined spectrum 204 wherein the blank contribution 204a is more or less than that which would typically occur from the blank. For example, in the case of two components, if both component spectra are added at over 50% of their reference concentration, a blank contribution from each component spectra will add to over 100% of a typical blank contribution. Accordingly, to obtain a representative simulated sample spectrum a blank contribution may need to be removed or added from the combined component spectra. This is achieved by randomly selecting a blank spectrum from the set of blank spectra and adding a blank contribution, $\underline{B}_E$, determined in accordance with:

$$\underline{B}_E = \left\{ 1 - \sum_k C_k \right\} \underline{B}$$

wherein $C_k$ is the concentration relative to its reference concentration for each component $k$ in the potential sample and $B$ is the selected blank spectrum. In this way, the resultant simulated sample spectrum 201 comprises a blank contribution 201a that is representative of that which would be found in a signal from a typical sample.

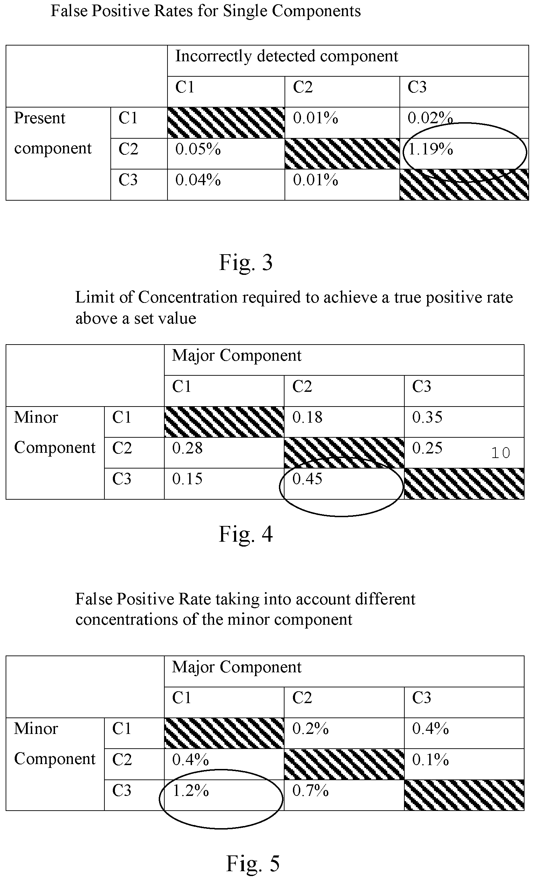

In a third step one or more measures of performance are calculated from the data set. Referring to Figure 3, in one embodiment, the measure of performance is an estimated percentage of false positives (specificity) for each component (ie a number of times a component is incorrectly identified as present for a specified sample). In Figure 3, false positives have been determined just for potential samples comprising only one component. Although false positives can be calculated for samples comprising multiple components, this is complicated by changes in the detection rate of components that may occur with changes in the relative concentrations of components within the samples, as described in more detail with reference to Figure 5.

Alternatively or additionally, the measure of performance may be an estimated number of true positives (sensitivity) for each specified sample.

Figure 4 illustrates a measure of performance that may be determined for samples comprising multiple components. For this measure, data is simulated for samples, wherein a ratio of a major component relative to its reference concentration and a minor component relative to its reference concentration is varied and a limit of concentration of the minor component is determined at which the number of true positives (sensitivity) is above a predefined level. A lower limit of concentration indicates that the component is detectable over a larger range of concentrations when in the presence of one or more other components. Such a measure of performance may be useful in designing a system, such as a multiplex assay, in that it may help to define a window of concentrations in which an analyte can be identified with a defined confidence level.

Figure 5 illustrates a measure of performance based upon estimated false positive rates for samples comprising multiple components. Such a measure differs from that shown in Figure 4, in that the false positives are associated with each combination of major and minor component. The false positive rate should be determined for a range of concentrations of the minor (and possibly major) component as, unlike true positives where the rate will typically fall off as the concentration of the minor component is reduced, a rate of false positives may not vary linearly with concentrations of the minor (or major) component.

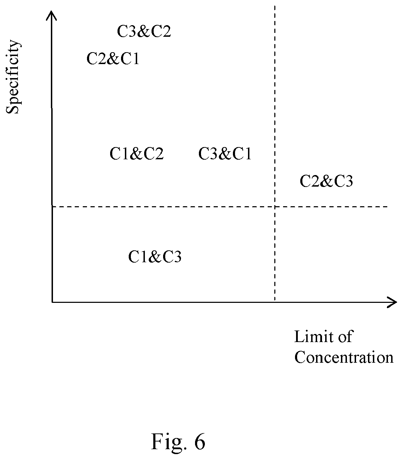

The measure(s) of performance may be used to select/modify specifications for a system. For example, a component may be selected for use in a multiplex assay based upon whether or not its sensitivity, limit of concentration and/or specificity is above a predefined level. Figure 6 illustrates how such a decision may be made. In Figure 6, the dotted lines represent cut-off points within which a performance of a sample is considered acceptable with respect to specificity and limit of concentration. As can be seen from the graph, in this illustration one sample comprising components C1 and C3 and another sample comprising components C2 and C3 have unacceptable levels of performance. This is also illustrated by the circled figures in Figures 4 and 5. By removing component C3 from the possible list of components, the unacceptable samples are eliminated. This may also eliminate a relatively high false positive rate for component C3 in a sample consisting of component C2.

Other measurements of performance may be used for selecting/modifying other specifications of the system. For example, measures of performance may be determined for different time periods between adding a colloid to a sample and taking a measurement. A cut-off point could then be determined at which a delay between adding the colloid and taking a measurement reduces sensitivity, specificity, a limit of concentration or other statistical measure of performance below an acceptable level. Such analysis may be carried out for other factors that may affect the spectroscopy signal, such as source of components/reagents, relative concentration of reagents and/or type of spectroscopy apparatus on which spectra are collected.

In a further embodiment, the simulated sample spectra that are simulated may be based upon probability distributions used to select the components and concentrations for the components. To simulate a simulated sample spectrum, firstly a random selection is made on whether or not each component of the set is present based upon a probability distribution. A simple form of such a selection comprises using data on probabilities that one, two, three, etc components are present in a sample to randomly select how many components are present and then randomly selecting, based on an equal probability for each component, that number of components from the set of components. Secondly, a random selection is made of the concentration of each component in the sample relative to its reference concentration. Again, a simple form of such a selection is to use a single probability distribution for concentration of a component to randomly select the concentrations of all the components that have been selected as present. A simulated sample spectrum is then simulated using a randomly selected spectrum for each component selected as present scaled for the chosen concentration.

Such a simple form for randomly selecting the component spectra and concentration used to simulate the simulated sample spectrum may be used because of lack of information on probabilities for individual components or because the likelihood of a component being present in a sample and/or likelihood of a component having a particular concentration relative to its reference concentration is the same or similar for all the components of the set and for all combinations of components. Where there is a significant variation between components, individual probability data may be used for each component. Such data may comprise data on the likelihood of each component being found on its own as well as the likelihood of the component being found in the presence of other components. For example, one component may be used as a control in a multiplex assay and therefore, have a very high chance of being present, or two components may have a zero or very low chance of being found together if they are naturally mutually exclusive. Different probability distributions for concentrations of the components may also be used.

The use of probability distributions for biasing selections could also be extended to the selection of a component spectrum for a particular component. For example, a random selection of a component spectrum may be made based upon a probability distribution for variation in a particular factor for which component spectra were collected, such as the time between adding a colloid to the sample and measurement where it may more likely that the time falls at a central time between two extremes. Selection of the component spectrum may be biased towards selecting a component spectrum obtained for a more likely value of the factor.

Such a method of forming simulated sample spectra may provide a set of simulated sample spectra that are more representative of that which would have been obtained through experiment/in use. A measurement of performance calculated from the set may be more representative of that to be expected because it is not unduly distorted by over-representation of simulated sample spectra determined for improbable potential samples.

The invention has particular application to measuring the performance of a multiplex assay in which SERRS is used to identify the components. However, the method of the invention could be used to measure the performance of other spectroscopy systems and, in particular, other Raman based systems, in which a reference spectrum is used to identify an unknown component from that unknown component's spectrum.

Referring to Figure 7, the Direct Classical Least Squares technique for analysing the simulated spectra models the simulated spectral data X in terms of a set of K known component reference spectra $S_k$ each having / data points. Component concentrations, $C_k$, for each component reference spectrum are determined by minimising the sum of the squared deviations of the spectral data from the reconstructed model,

$$\sum_i^I \left[ X_i - \sum_k^K C_k S_{ki} \right]^2 \qquad (1)$$

where i represents the spectral frequency index. This results in a series of linear equations which can be solved directly by matrix inversion for the component concentrations $C_k$.

An iterative process is carried out in which Equation (1) is resolved for each candidate component using the selected reference spectrum, steps 103 to 108.

In step 103, for each candidate component, equation (1) is minimised for the component's reference spectrum together with any component reference spectra that have already been selected in a previous iteration. A measure of goodness of fit is calculated for the resolved components relative to the simulated spectrum.

The measure of goodness of fit can be a measure of lack of fit (LoF) given by:-

$$LoF = \sqrt{\frac{\sum_{i=1}^I \left[ X_i - \sum_{k=1}^K C_k S_{ki} \right]^2}{\sum_{i=1}^I X_i^2}} \qquad (2)$$

This measure of lack of fit is compared to a previous measure of LoF calculated for the selected component reference spectra before the addition of the candidate component reference spectrum to determine an improvement to the measure of LoF resulting from the addition.

The improvement in the LoF, $L_{Ipr}$, is calculated as a proportional improvement in the LoF :-

$$L_{Ipr} = \frac{L_{old} - L_{new}}{L_{old}} \qquad (3)$$

where $L_{old}$ is the LoF value calculated for the selected component reference spectra before the inclusion of the candidate component reference spectrum and $L_{new}$ is the LoF value calculated for the selected component reference spectra including the candidate component reference spectrum.

In step 104, the candidate component reference spectra resolved as having a negative concentration are removed from further consideration in the iteration (but not subsequent iterations).

In step 105, the improvements in the LoF, $L_{Ipr}$, for the remaining candidate component reference spectra are compared and the candidate component reference spectrum associated with the greatest improvement in the LoF becomes the leading candidate component reference spectrum for inclusion in the final form of the model.

A check 106 is made to determine whether the improvement in the LoF resulting from addition of the leading candidate component reference spectrum is above a preset limit. If the improvement to the LoF, $L_{Ipr}$, for the leading candidate component reference spectrum is above the preset limit, it is selected 107 as a component reference spectrum that is present in the final form of the model. The process 103 to 107 is then repeated for the remaining unselected component reference spectra.

If the improvement to the LoF, $L_{Ipr}$, for the leading component reference spectrum is below the preset limit, then the method is terminated and the final form of the model, comprising the model resolved for the component reference spectra selected up to that point, is output. The final form of the model will typically comprise a subset of the set of predetermined component reference spectra, these spectra being those of most significance as measured by lack of fit.

A determination can be made of components present in the sample based upon whether the reference spectrum corresponding to a component is included in the final form of the model.

**Claims**

1. A method of measuring performance of a spectroscopy system with respect to variations in at least one factor that affects a measurement by the spectroscopy system of component spectra of a plurality of components in a sample comprising

   a) obtaining with the spectroscopy system, for each component of a set of components that are to be identified by the system, a plurality of component spectra, the plurality of component spectra for each component being obtained by spectroscopy measurements for variations of at least one factor that affects the component spectrum,
   b) simulating sample spectra, each simulated sample spectrum being simulated for a corresponding potential sample comprising multiple components of the set of components by combining the component spectra of the respective components of the potential sample, the component spectra being obtained for variations of the at least one factor that affect the component spectrum, each simulated sample spectrum simulated for specified components and/or specified concentrations of the components in the corresponding potential sample and each simulated sample spectrum simulated using a different component spectrum for at least one of the components and/or a different amount of at least one of the component spectra to that used to simulate the other simulated sample spectra;
   c) analysing with an algorithm of the spectroscopy system the simulated sample spectra to obtain, for each simulated sample spectrum, a measure of the presence/absence of each component and/or concentration of each component in the corresponding potential sample, and
   d) generating a measure of performance based upon a comparison of each measure of presence/absence of each component and/or concentration of each component with the corresponding specified components and/or specified concentrations of the components for the corresponding potential sample.

2. A method according to claim 1, wherein the measure of performance comprises a measure of sensitivity and/or specificity of the system in identifying and/or quantifying one or more of the components in a sample.

3. A method according to claim 1 or claim 2, wherein the measure of performance comprises a limit of concentration of one or more of the components in a sample at which a minimum level of sensitivity is achieved for identifying and/or quantifying the component.

4. A method according to any one of the preceding claims, wherein the analyses comprises analysing each simulated sample spectrum using a reference spectrum for each component to obtain the measure.

5. A method according to claim 4, comprising selecting a reference spectrum for each component of the set of components, each reference spectrum selected from the plurality of component spectra for that component and differing from the component spectrum used to simulate the simulated sample spectrum that is analysed using that reference spectrum.

6. A method according to claim 5, comprising selecting different reference spectra for the analyses of different simulated sample spectra.

7. A method according to any one of the preceding claims, wherein the plurality of component spectra for each component is obtained by performing experiments in accordance with an experimental design, in which factors identified as influencing a spectral response the components are varied through a range of possibilities.

8. A method according to claim 7, wherein the factors include one or more of the operator, time between preparation of a sample and measurement, instrument from which spectra are obtained, batch of the component(s) and batch of reagents.

9. A method according to any one of the preceding claims, wherein the plurality of spectra obtained in step a) for each component are obtained with the component at the same reference concentration.

10. A method according to any one of the preceding claims, wherein the simulated sample spectra are simulated for different concentrations of the or each component in the corresponding potential sample.

11. A method according any one of the preceding claims, wherein the reference spectra and/or the component spectrum/spectra used to simulate the simulated sample spectrum are randomly selected from an appropriate set of the component spectra.

12. A method according to any one of preceding claims, wherein the or each component in the corresponding potential sample and/or a concentration of the or each component in the corresponding potential sample is randomly selected based upon at least one probability distribution.

13. A method of designing a spectroscopy system comprising measuring a performance of the spectroscopy using the method according to any one of claims 1 to 12 and selecting and/or modifying specifications of the system based upon the measurement of performance.

**Patentansprüche**

1. Verfahren zum Messen einer Leistungsfähigkeit eines Spektroskopiesystems in Bezug auf Schwankungen in zumindest einem Faktor, der eine Messung von Komponentenspektren einer Mehrzahl von Komponenten in einer Probe durch das Spektroskopiesystem beeinflusst, umfassend, dass:

a) mit dem Spektroskopiesystem für jede Komponente eines Satzes von Komponenten, die von dem System zu identifizieren sind, eine Mehrzahl von Komponentenspektren erhalten wird, wobei die Mehrzahl von Komponentenspektren für jede Komponente durch Spektroskopiemessungen für Schwankungen zumindest eines Faktors, der das Komponentenspektrum beeinflusst, erhalten wird,
b) Probenspektren simuliert werden, wobei jedes simulierte Probenspektrum für eine entsprechende potentielle Probe simuliert wird, die mehrere Komponenten des Satzes von Komponenten umfasst, indem die Komponentenspektren der jeweiligen Komponenten der potentiellen Probe kombiniert werden, wobei die Komponentenspektren für Schwankungen des zumindest einen Faktors erhalten werden, der das Komponentenspektrum beeinflusst, wobei jedes simulierte Probenspektrum für spezifizierte Komponenten und/oder spezifizierte Konzentrationen der Komponenten in der entsprechenden potentiellen Probe simuliert wird, und jedes simulierte Probenspektrum unter Verwendung eines verschiedenen Komponentenspektrums für zumindest eine der Komponenten und/oder eines verschiedenen Betrags zumindest eines der Komponentenspektren, als die verwendeten, simuliert wird, um das andere simulierte Probenspektrum zu simulieren;
c) mit einem Algorithmus des Spektroskopiesystems das simulierte Probenspektrum analysiert wird, um für jedes simulierte Probenspektrum ein Maß der Anwesenheit/Abwesenheit jeder Komponente und/oder Konzentration jeder Komponente in der entsprechenden potentiellen Probe zu erhalten, und
d) ein Maß der Leistungsfähigkeit auf Grundlage eines Vergleichs jedes Maßes der Anwesenheit/Abwesenheit jeder Komponente und/oder Konzentration jeder Komponente mit den entsprechenden spezifizierten Komponenten und/oder spezifizierten Konzentrationen der Komponenten für die entsprechende potentielle Probe erzeugt wird.

2. Verfahren nach Anspruch 1, wobei das Maß der Leistungsfähigkeit ein Maß der Empfindlichkeit und/oder Spezifität des Systems beim Identifizieren und/oder Quantifizieren einer oder mehrerer Komponenten einer Probe umfasst.

3. Verfahren nach einem der Ansprüche 1 oder 2, wobei das Maß der Leistungsfähigkeit eine Konzentrationsgrenze einer oder mehrerer der Komponenten in einer Probe umfasst, bei denen ein minimales Niveau an Empfindlichkeit zum Identifizieren und/oder Quantifizieren der Komponente erreicht ist.

4. Verfahren nach einem der vorhergehenden Ansprüche, wobei die Analysen ein Analysieren jedes simulierten Probenspektrums unter Verwendung eines Referenzspektrums für jede Komponente umfasst, um das Maß zu erhalten.

**5.** Verfahren nach Anspruch 4, umfassend, dass ein Referenzspektrum für jede Komponente des Satzes von Komponenten gewählt wird, wobei jedes Referenzspektrum aus der Mehrzahl von Komponentenspektren für diese Komponente gewählt ist und sich von dem Komponentenspektrum unterscheidet, das verwendet ist, um das simulierte Probenspektrum zu simulieren, das unter Verwendung des Referenzspektrums analysiert ist.

**6.** Verfahren nach Anspruch 5, umfassend, dass verschiedene Referenzspektren für die Analyse verschiedener simulierter Probenspektren gewählt werden.

**7.** Verfahren nach einem der vorhergehenden Ansprüche, wobei die Mehrzahl von Komponentenspektren für jede Komponente durch Ausführen von Experimenten gemäß einer experimentellen Auslegung erhalten werden, in der Faktoren, die als Beeinflussung eines spektralen Ansprechens der Komponenten identifiziert sind, über einen möglichen Bereich variiert werden.

**8.** Verfahren nach Anspruch 7, wobei die Faktoren eines oder mehrere aus dem Bediener, der Zeit zwischen Vorbereitung einer Probe und Messung, dem Instrument, von dem Spektren erhalten werden, der Charge der Komponente(n) und der Charge von Reagenzien umfasst.

**9.** Verfahren nach einem der vorhergehenden Ansprüche, wobei die Mehrzahl von Spektren, die bei Schritt a) für jede Komponente erhalten werden, mit der Komponente bei derselben Referenzkonzentration erhalten werden.

**10.** Verfahren nach einem der vorhergehenden Ansprüche, wobei die simulierten Probenspektren für verschiedene Konzentrationen des oder jeder Komponente in der entsprechenden potentiellen Probe simuliert werden.

**11.** Verfahren nach einem der vorhergehenden Ansprüche, wobei die Referenzspektren und/oder das Komponentenspektrum/die Komponentenspektren, die zur Simulation des simulierten Probenspektrums verwendet sind, zufällig aus einem geeigneten Satz von Komponentenspektren gewählt sind.

**12.** Verfahren nach einem der vorhergehenden Ansprüche, wobei die oder jede Komponente in der entsprechenden potentiellen Probe und/oder eine Konzentration der oder jeder Komponente in der entsprechenden potentiellen Probe zufällig basierend auf zumindest einer Wahrscheinlichkeitsverteilung gewählt ist.

**13.** Verfahren zum Auslegen eines Spektroskopiesystems, umfassend, dass eine Leistungsfähigkeit der Spektroskopie unter Verwendung des Verfahrens nach einem der Ansprüche 1 bis 12 gemessen wird und Spezifikationen des Systems basierend auf der Messung der Leistungsfähigkeit gewählt und/oder modifiziert werden.

**Revendications**

**1.** Procédé de mesure de la performance d'un système de spectroscopie par rapport à des variations d'au moins un facteur qui affecte une mesure par le système de spectroscopie de spectres de composant d'une pluralité de composants dans un échantillon comprenant le fait

a) d'obtenir avec le système de spectroscopie, pour chaque composant d'un ensemble de composants qui doivent être identifiés par le système, une pluralité de spectres de composant, la pluralité de spectres de composant pour chaque composant étant obtenue par des mesures de spectroscopie pour des variations d'au moins un facteur qui affecte le spectre de composant,
b) de simuler des spectres d'échantillon, chaque spectre d'échantillon simulé étant simulé pour un échantillon potentiel correspondant comprenant de multiples composants de l'ensemble de composants en combinant les spectres de composant des composants respectifs de l'échantillon potentiel, les spectres de composant étant obtenus pour des variations de l'au moins un facteur qui affecte le spectre de composant, chaque spectre d'échantillon simulé étant simulé pour des composants spécifiés et/ou des concentrations spécifiées des composants dans l'échantillon potentiel correspondant et chaque spectre d'échantillon simulé étant simulé en utilisant un spectre de composant différent pour au moins l'un des composants et/ou une quantité différente d'au moins l'un des spectres de composant par rapport à celui/celle utilisé(e) pour simuler les autres spectres d'échantillon simulés ;
c) d'analyser avec un algorithme du système de spectroscopie les spectres d'échantillon simulés pour obtenir, pour chaque spectre d'échantillon simulé, une mesure de la présence/absence de chaque composant et/ou de la concentration de chaque composant dans l'échantillon potentiel correspondant, et

d) de générer une mesure de performance sur la base d'une comparaison de chaque mesure de la présence/absence de chaque composant et/ou de la concentration de chaque composant avec les composants spécifiés correspondants et/ou les concentrations spécifiées correspondantes des composants pour l'échantillon potentiel correspondant.

2. Procédé selon la revendication 1, dans lequel la mesure de performance comprend une mesure de sensibilité et/ou de spécificité du système lors de l'identification et/ou de la quantification d'un ou de plusieurs des composants dans un échantillon.

3. Procédé selon la revendication 1 ou 2, dans lequel la mesure des performances comprend une limite de concentration d'un ou de plusieurs des composants dans un échantillon à laquelle un niveau minimal de sensibilité est atteint pour identifier et/ou quantifier le composant.

4. Procédé selon l'une quelconque des revendications précédentes, dans lequel l'analyse comprend le fait d'analyser chaque spectre d'échantillon simulé en utilisant un spectre de référence pour chaque composant pour obtenir la mesure.

5. Procédé selon la revendication 4, comprenant la sélection d'un spectre de référence pour chaque composant de l'ensemble de composants, chaque spectre de référence étant sélectionné parmi la pluralité de spectres de composant pour ce composant et différant du spectre de composant utilisé pour simuler le spectre d'échantillon simulé qui est analysé en utilisant ce spectre de référence.

6. Procédé selon la revendication 5, comprenant la sélection de différents spectres de référence pour les analyses de différents spectres d'échantillon simulés.

7. Procédé selon l'une quelconque des revendications précédentes, dans lequel la pluralité de spectres de composant pour chaque composant est obtenue par réalisation d'expériences conformément à une conception expérimentale, où des facteurs identifiés comme influençant une réponse spectrale des composants varient selon une plage de possibilités.

8. Procédé selon la revendication 7, dans lequel les facteurs comportent un ou plusieurs parmi l'opérateur, le temps entre la préparation d'un échantillon et la mesure, un instrument à partir duquel des spectres sont obtenus, un lot du/des composant(s) et un lot de réactifs.

9. Procédé selon l'une quelconque des revendications précédentes, dans lequel la pluralité de spectres obtenus à l'étape a) pour chaque composant sont obtenus avec le composant à la même concentration de référence.

10. Procédé selon l'une quelconque des revendications précédentes, dans lequel les spectres d'échantillon simulés sont simulés pour différentes concentrations du ou de chaque composant dans l'échantillon potentiel correspondant.

11. Procédé selon l'une quelconque des revendications précédentes, dans lequel les spectres de référence et/ou le spectre/les spectres de composant(s) utilisé(s) pour simuler le spectre d'échantillon simulé est/sont sélectionné(s) de manière aléatoire à partir d'un ensemble approprié des spectres de composant.

12. Procédé selon l'une quelconque des revendications précédentes, dans lequel le ou chaque composant dans l'échantillon potentiel correspondant et/ou une concentration du ou de chaque composant dans l'échantillon potentiel correspondant est sélectionné(e)/sont sélectionnés de manière aléatoire sur la base d'au moins une distribution de probabilité.

13. Procédé de conception d'un système de spectroscopie comprenant la mesure d'une performance de la spectroscopie en utilisant le procédé selon l'une quelconque des revendications 1 à 12 et la sélection et/ou la modification de spécifications du système sur la base de la mesure de performance.

a)

| Sample | Reference Spectrum | | | Sample Spectrum | Detected |
|---|---|---|---|---|---|
| | C1 | C2 | C3 | | |
| C1 | F4 | F1 | F2 | F1 | C1 |
| C1 | F3 | F4 | F2 | F2 | C1 |
| C1 | F2 | F2 | F3 | F3 | C1 & C3 |
| . | . | . | . | . | . |
| . | . | . | . | . | . |
| . | . | . | . | . | . |
| C2 | F2 | F2 | F3 | F4 | C2 |
| C2 | F3 | F4 | F4 | F2 | C3 |
| . | . | . | . | . | . |
| . | . | . | . | . | . |
| . | . | . | . | . | . |
| C2 & C3 | F2 | F1 | F3 | F4 (150%) & F2 (50%) | C2 & C3 |

Fig. 1

Fig. 2

False Positive Rates for Single Components

| | | Incorrectly detected component | | |
|---|---|---|---|---|
| | | C1 | C2 | C3 |
| Present component | C1 | ///// | 0.01% | 0.02% |
| | C2 | 0.05% | ///// | 1.19% |
| | C3 | 0.04% | 0.01% | ///// |

## Fig. 3

Limit of Concentration required to achieve a true positive rate above a set value

| | | Major Component | | |
|---|---|---|---|---|
| | | C1 | C2 | C3 |
| Minor Component | C1 | ///// | 0.18 | 0.35 |
| | C2 | 0.28 | ///// | 0.25 |
| | C3 | 0.15 | 0.45 | ///// |

## Fig. 4

False Positive Rate taking into account different concentrations of the minor component

| | | Major Component | | |
|---|---|---|---|---|
| | | C1 | C2 | C3 |
| Minor Component | C1 | ///// | 0.2% | 0.4% |
| | C2 | 0.4% | ///// | 0.1% |
| | C3 | 1.2% | 0.7% | ///// |

## Fig. 5

Fig. 6

Receive a Raman spectrum of a sample.

101

Retrieve component reference spectra.

102

For each candidate spectrum, resolve the DCLS model for the candidate spectrum together with any component reference spectra already selected for the final form of the model and calculate an improvement in a measure of LoF.

103

Fig. 7

Remove from consideration candidate spectra resolved as having a negative concentration.

104

Compare the measures of LoF to determine a leading candidate spectrum that results in the greatest improvement to the LoF.

105

Terminate iteration, resolve the model for the selected component reference spectra and output calculated concentrations for components in the sample.

108

Check that the improvement in the LoF resulting from inclusion of the leading candidate spectrum to the model is above a preset limit.

106

No

Yes

Select the leading candidate spectrum for the final form of the model.

107

**EP 2 834 624 B1**

## REFERENCES CITED IN THE DESCRIPTION

**Patent documents cited in the description**

- WO 09022125 A
- US 2006246460 A
- US 2005192767 A1